# EUROPÄISCHE PATENTANMELDUNG

(11) **EP 1 798 418 A2**
(43) Veröffentlichungstag der Anmeldung: **20.06.2007**
(21) Anmeldenummer: 06025796.1
(22) Anmeldetag: 13.12.2006
(51) Int. Cl.: F04D 29/02, F04D 29/32, F04D 29/38

(54) **Lüfterrad und Verfahren zu dessen Herstellung**

(30) Priorität: 13.12.2005 DE 102005059978; 17.07.2006 DE 102006033011
(71) Anmelder: Dynamic Compounds GmbH & Co. KG, 76437 Rastatt (DE)
(72) Erfinder: Heiser, Wolfgang, Dr.-Ing., 76133 Karlsruhe (DE); Petzoldt, Andreas, Dipl.-Ing. (FH), 77871 Renchen-Ulm (DE); Kresse, Martin, Dipl.-Ing., 76316 Maisch (DE); Kresse, Michael, Dipl.-Kfm., 76316 Wasen (DE)
(74) Vertreter: Geitz Truckenmüller Lucht

(57) **Zusammenfassung**

Die Erfindung betrifft ein Verfahren zur Herstellung eines dreidimensionalen werkstücks aus Faserverbundwerkstoffen, insbesondere kohlefaserverstärktem Kunststoff (CFK). Das Verfahren zeichnet sich durch die Verwendung eines, vorzugsweise aus Polyamid gefertigten, Blaslings als Inlay (3) aus, wobei dieser Blasling mit einem CFK-Gewebe beschickt und anschließend mit einem Überdruck beaufschlagt und innerhalb eines Mikrowellenofens (8) mit dem CFK-Gewebe verbunden und ausgehärtet wird.

## Beschreibung

Die Erfindung betrifft ein Lüfterrad für einen Axialventilator, insbesondere einen Tunnelstrahlventilator zur Tunnelbe- und -entlüftung, mit mehreren Lüfterschaufeln, jeweils umfassend einen Lüfterflügel und einen Einspannzapfen, die mit einer zentralen Nabe durch kraftschlilssiges Verspannen des Einspannzapfens verbunden sind, wobei zumindest die Lüfterflügel aus einem kohlefaserverstärkten Kunststoffgewebe, kurz einem CFK-Gewebe, gefertigt sind, sowie Verfahren zu dessen Herstellung.

Ein derartiges Lüfterrad ist etwa aus der DE 101 04 170 A1 bekannt. Das vorbekannte Lüfterrad betrifft den Bereich der Förderung oder Verdichtung von Prozessgasen. In diesem Bereich wurden bislang Lüfterräder aus Stahl oder Aluminium in Form einer Schweißkonstruktion oder eines Gussteils eingesetzt. Im Zusammenhang mit zunehmenden Fördermengen, Fördergeschwindigkeiten und Druckdifferenzen zwischen Saug- und Druckseite des Lüfters sind inzwischen die Belastungsgrenzen der aus Stahl und Aluminium gefertigten Lüfterräder erreicht worden. Ein weiteres Problem besteht in der Gewichtsproblematik der bisherigen Konstruktionen zumindest im Bereich von Großlüfteranlagen. Die in diesem Zusammenhang benötigten. Anlaufzeiten, aber auch der benötigte Energie-Aufwand werden zunehmend als unbefriedigend empfunden.

Zu diesem Stand der Technik empfiehlt die DE 101 04 170 A1 die Verwendung eines Lüfterrades, das mehr oder minder vollständig aus einem faserverstärkten Kunststoff gefertigt ist.

Dabei werden die Lüfterschaufeln aus zwei flächigen Bauelementen zusammengefügt, insbesondere verklebt. Die Halbschalen der Lüfterschaufeln werden aus Geweben bzw. Gewebefasern geflochten oder gewirkt, wobei die Gewebefasern mit Glasfasern, Kohlestoffiasern oder Aramitfasern verstärkt sind.

Es hat sich allerdings gezeigt, dass mit derartigen Lüfterrädern zwar der vorteil eines deutlich reduzierten Gewichts erreicht wird, aber andererseits gerade die Verbindungsstellen zwischen der Oberformschale und der Unterformschale zur Herstellung des Lüfterflügels, die mittels einer Klebeverbindung verbunden sind, einen Schwachpunkt darstellt. Diese Klebeverbindungen sind den zumeist hohen Belastungen entweder durch hohe Temperaturen oder den einwirkenden mechanischen Kräften oft nicht gewachsen.

Eine weitere Schwachstelle dieser Lüfterflügel ist der übergangsbereich von der Lüfterschaufel zum Einspannzapfen zur kraftschlüssigen Verbindung mit der Lüfternabe. Die in diesem Bereich unvermeidliche Einschnürung des Querschnitts des Lüfterflügels verursacht entsprechende Spannungen in diesem Bereich, die wiederum durch zusätzliche Klebeverbindungen in diesem Bereich ausgeglichen werden sollten. Die Klebeverbindungen besitzen aber zumeist nicht die erforderliche Temperaturbeständigkeit.

Eine alternative Fertigungsmöglichkeit für derartige Lüfterflügel, die allerdings nicht in der DE 101 04 170 A1 beschrieben ist, ist die Verwendung eines Schaumkerns, der im wesentlichen das Profil des gewünschten Lüfterflügels aufweist, der dann mit entsprechenden Gewebelagen unter Beimengung geeigneter Harze umwickelt wird und anschließend quasi mit den aufliegenden Gewebelagen zu dem jeweiligen Lüfterflügel verbacken wird. Hierbei kann auf die als nachteilig empfundenen Klebenähte verzichtet werden. Allerdings wird dies weitgehend mit dem Verlust des vorstehend beschriebenen Gewichtsvorteils bezahlt, da der Schaumkern im Lüfterflügel verbleibt.

Es ist weiterhin bekannt, Lüfterräder aus derartigen Kohlenstofffaser-Kunststoff-Verbundwerkstoffe (CFK-Verbundwerkstoffe) in Autoklaven herzustellen. In diesen Autoklaven werden üblicherweise Drücke von bis zu 10 bar und Temperaturen von bis zu 400 °C erzeugt. Die Druckbeaufschlagung erfolgt mittels Kompressoren. Oft werden auch Druckspeicher verwandt, um bei kleineren Kompressionen bedarfsweise ausreichend Druckluft bereitstellen zu können.

Der hohe Druck im Inneren des Autoklaven wird genutzt, um die einzelnen Laminatschichten der Verbundstoffe zu verpressen. Meistens wird das Bauteil zusätzlich, etwa mittels eines Vakuumsacks, im Autoklaven evakuiert, um überschüssige Luft aus dem verbund zu entfernen. Das Kunstharz im Faserverbund-Bauteil, bei dem es sich zumeist um Epoxid-Harze handelt, wird dann bei hoher Temperatur, etwa 100 - 250 °C, über mehrere Stunden ausgehärtet. Allerdings sind die hohen Anschaffungskosten der Autoklaven sowie die erheblichen Energiekosten für den Betrieb eines Autoklaven auch ein erheblicher Zertigtmgsnachteil, so dass diese Technik bisher nur im Bereich der Hochtechnologie, also für Zwecke der Luft- und Raumfahrt oder des Motorsports zum Einsatz kommt bzw. bei extrem hochpreisigen Produkten, wie etwa bei Spitzen-Fahrrädern des Hochpreis-Bereichs, genutzt wird.

Üblicherweise werden im Bereich großflächiger und wenig gekrümmter Bauteile, wie etwa im Flugzeugbereich, mit Harz imprägnierte Carbonfaser-Bänder, so genannte "Prepregs", eingesetzt. Vor dem Aushärten durch Druck und Hitze im Autoklaven, mithin dem besagten Hochdruckofen, werden sie mittels rechnergesteuerter Tape-Legemaschinen in die spätere Form gebracht.

Für stärker gekrümmte oder komplexere Strukturen werden derzeit andere Herstellungsmethoden überprüft. So werden beispielsweise Bauteile aus CFK-Gewebe zunächst in einem trockenen Zustand in die gewünschte Form gebracht und das vorstehend erwähnte Harz erst danach in das Gewebe eingearbeitet. So werden beispielsweise bei der Herstellung der Airbus-Druckkalotte multiaxiale Carbonfaser-Gelege anstelle der erwähnten Prepregs eingesetzt. Zur Verbindung der genannten Gelege-Bahnen werden maschinell Nähte gefertigt. Zur Erhöhung der Festigkeit können mehrere der auf diese Weise gefertigten Teppiche übereinander gelegt und wiederum im Autoklaven unter Hitze und Vakuum ausgehärtet werden.

Um insbesondere die beträchtlichen Kosten für den Betrieb eines Autoklaven zu sparen, wird darüber hinaus in letzter Zeit mit Mikrowellenöfen experimentiert. Zwar kann über die genannten Mikrowellenöfen die gewünschte Temperatur vergleichsweise kostengünstig erzeugt werden. Bis dato ist es aber nicht bekannt, derartige Mikrowellenöfen auch als Hochdrucköfen auszubilden. Der Einsatz derartiger Hochdrucköfen ist aber der Garant für hochpräzise Oberflächen, die extrem formtreu und glatt, also ohne Blasenbildung, gefertigt sind.

Eine weitere Herausforderung bei der Fertigung von dreidimensionalen Werkstücken unter Einsatz von kohlenstofffaserverstärktem Kunststoff ist es, diese Werkzeuge unter Belassung eines Hohlraumes auszubilden- Ein Interesse an solchen Werkstücken besteht schon aus Gewichts- und Kostengründen. Es wird daher teilweise mit verschiedenen Armierungstechniken gearbeitet, also mit Techniken, bei denen Versteifungen oder Verstärkungselemente in das entsprechende carbonfaserverstärkte werkstück eingearbeitet werden.

Ausgehend von diesem Stand der Technik liegt der Erfindung die Aufgabe zugrunde, ein Lüfterrad aus einem geeigneten Faserverbundwerkstoff zu schaffen, das über eine höhere Temperaturbeständigkeit und höhere mechanische Festigkeit verfügt.

Gelöst wird diese Aufgabe durch ein Lüfterrad gemäß den Merkmalen des Hauptanspruchs, sowie durch ein Verfahren zur Herstellung eines Lüfterrades gemäß den Merkmalen eines der nebengeordneten Ansprüche 6, 9 oder 10 und der Verwendung des Verfahrens nach Anspruch 24. Sinnvolle Weiterbildungen der genannten Vorrichtungen und Verfahren können den jeweiligen unteransprüchen und dieser Beschreibungseinleitung entnommen werden.

Die erfindungsgemäße Aufgabe wird gemäß Hauptanspruch dadurch gelöst, dass der Lüfterflügel des Lüfterrads frei von entsprechenden Klebenähten gefertigt ist und überdies hohl ausgebildet ist. Das zuletzt genannte Merkmal hat den Vorteil einer deutlichen Gewichtsersparnis, was wiederum den Vorteil hat, dass die Hochlaufzeit eines mit einer entsprechenden Lüfterschaufel bzw. einem entsprechenden Lüfterrad bestückten Ventilator deutlich reduziert wird, da das Massenträgheitsmoment des Lüfters aufgrund der erwähnten Gewichtsersparnis reduziert ist. Die Hochlaufzeit ist insbesondere im Bereich der Tunnelbe- und -entlüftung ein entscheidendes Qualitätsmerkmal, da nur eine kurze Zeit verbleibt, im Brandfall die gefährlichen Brandgase abzuführen.

Es hat sich als vorteilhaft erwiesen, die Gewebefasern, insbesondere die in den Geweben enthaltenen Kohlefasern, zur Längserstreckung radial nach außen weisend bei der Fertigung des Lüfterflügels anzuordnen. Die Zugfestigkeit der Kohlefasern ist in Längsrichtung deutlich höher als in Querrichtung. Die im Bereich hoher Drehzahlen einwirkenden Zentrifugalkräfte können so deutlich besser gehalten werden bzw. höhere Drehzahlbereiche durchfahren werden, ohne dass der Lüfter überbeansprucht wird.

In vorteilhafter Ausgestaltung ist auch der Einspannzapfen aus einem CFK-Gewebe gefertigt.

In dem bereits erwähnten, schwierig zu fertigenden Anschlussbereich, also im übergangsbereich vom Lüfterflügel zum Anspannzapfen, wird auch dieser Bereich zunächst mit dem CFK-Gewebe vollständig überlappend ausgeführt und anschließend ein Loch zum Einsetzen des Ansteckzapfens eingearbeitet. Dieses Loch wird dabei möglichst so eingearbeitet, dass die in Längsrichtung verlaufenden Kohlefasern nicht unterbrochen werden.

In abermals vorteilhafter Ausgestaltung wird der Lüfterflügel insgesamt so gefertigt, dass er nach der erfindungsgemäßen Herstellung zumindest weitgehend hohl ausgebildet ist.

Die Festigkeit des Lüfterflügels in thermischer Hinsicht kann dadurch erhöht werden, dass in das CFK-Gewebe zum Aufbau der Wandung des Lüfterflügels keramische werkstoffe, entweder siliziumkarbidfaserverstärktes Siliziumkarbid oder Reinsilizium in Verbindung mit zur Infusion geeigneter Harze zum Aufbau der Flügelwandung des Lüfters eingearbeitet wird. Dabei wird etwa mittels des RTM-(Resin-Transfer-Moulding-) Verfahrens Harz in eine Form eingeführt, in der bereits ein Kern aufgenommen ist, der gemäß den vorstehenden Ausführungen mit Gewebefasern belegt wurde. Das Harz wird dann solange der Form zugeführt, bis es auf der der Einfüllseite abgewandten Seite frei von Blasen austritt. Als Matrix werden hierbei Epoxid-Harze, Harze auf Methacrylatbasis oder Harze auf Polymerbasis eingesetzt.

In abermals vorteilhafter Weiterbildung werden die Gewebelagen des CFK-Gewebes im Anschlussbereich des Lüfterflügels im Wesentlichen einstückig und mit vorzugsweise minimaler Scherung verlegt.

Der eigentliche RTM-Prozess beginnt zunächst mit der Einlage von Verstärkungsfasern, die in Form von Endlosfasermatten, Geweben oder speziell entwickelten Komplexen Verwendung finden können. Zur Anwendung gelangen dabei unterschiedliche Faserwerkstoffe wie Glasfasern, Aramitfasern, hier aber insbesondere Kohlefasern. Für Sandwich-Konstruktionen werden Kernwerkstoffe wie Polyurethanschaum, PVC-Sehaum, Balsaholz und andere Materialien, hier vorzugsweise Harz, verwendet. Nach Einlage der Armierungsmaterialien und Sandwichstoffe wird die Form geschlossen. Wenn die Form geschlossen ist, wird dann das Harz-Härter-Gemisch über einen oder mehrere Harzinjektionsports in die besagte Form gespritzt. Die erfindungsgemäßen Lüfterflügel können aber auch mit anderen Harzinfusionsverfahren, etwa dem RI- (Resin-Infusion-) verfahren im Rahmen der Erfindung hergestellt werden.

Die erfindungsgemäße Aufgabe wird auch durch ein Verfahren zur Herstellung der erfindungsgemäßen Lüfterräder gelöst. Dabei können die als nachteilig empfundenen Gewebenähte dadurch verhindert werden, dass der Lüfterflügel geschlossen aus entsprechenden Gewebefasern aufgebaut wird, die um einen, vorzugsweise aus wachs gefertigten, Kern aufgelegt werdenDer Kern wird zu einem späteren Zeitpunkt unter dem Einfluss von Temperatur und Zentrifugalkräften aus einer entsprechenden Form wieder ausgetrieben, so dass am Ende ein extrem leichter Flügel, der innen überwiegend hohl ausgebildet ist, zur Verfügung steht.

Das Wachs wird üblicherweise beim Aushärten des in der Form aufgenommenen Laminats im Autoklaven oder zu einem früheren Zeitpunkt, jedenfalls bei entsprechend hoher Temperatur, durch ein Loch, vorzugsweise an der Lüfterflügelspitze, ausgetrieben.

Zum Aufbau der Wandung des Lüfterflügels können in besonders beanspruchten Bereichen zusätzliche CFK-Gewebefasern aufgebracht werden. Hierdurch können besonders beanspruchte Bereiche des Lüfterflügels bedarfsweise verstärkt werden. Insbesondere das vorstehend beschriebene und bevorzugt hier zur Fertigung eingesetzte RTM-Verfahren bietet den Vorteil, dassdie Armierungsmaterialien den Anforderungen entsprechend eingebracht werden können. So ist es möglich, die Teilefestigkeit nach Höhe und Ausrichtung exakt auf die Anforderungen einzustellen. Durch die Verwendung unterschiedlicher Materialien und unterschiedlicher Anteile an Armierungsstoffen können diese Eigenschaften in einem großen Ausmaß variiert werden.

In vorteilhafter Weiterbildung ist der Kern zum Aufbau des Lüfterflügels mit speziellen Ausnehmungen, etwa Furchen oder Rillen, versehen, um in diesen Furchen oder Rillen spezielle Kohlefaserschnüre, sogenannte Rovings, einzulegen, die eine besondere Biegesteifigkeit der Flügel und insbesondere einwirkende Querkräfte aufnehmen können.

Durch ein spezielles Infiltrationsverfahren wird mit dem Harz, das zum Aufbau der Wandung des Lüfterflügels in die Form eingeführt wird, ein keramischer Werkstoff, vorzugsweise siliziumkarbidfaserverstärktes Siliziumkarbid oder reines Silizium, eingeführt, um so die Temperaturbeständigkeit der Lüfterflügel zu erhöhen.

Die so gefertigten Lüfterflügel werden dann in entsprechende Stecköffnungen der Nabe gesteckt und mit dieser verschraubt.

In völlig alternativer Herstellung können entsprechend dünne Lüfterflügelprofile durch ein reines Pressverfahren mittels einer beheizten Presse hergestellt werden, ohne dass der vorstehend beschriebene Wachskern hierzu benötigt würde.

Eine weitere Alternative zur Herstellung eines Lüfterrades besteht darin, dass zunächst ein Hohlkammer-Blasteil aus einem geeigneten Thermoplast als Inlay zur Herstellung des gewünschten dreidimensionalen Werkstücks gefertigt wird. Dabei hat der Blasling zumindest annähernd die Form des zu fertigenden Werkstücks. Der Blasling wird anschließend, in an sich bekannter Weise, mit einem je nach zu fertigendem Werkstück geeigneten CFK-Gewebe beschickt und anschließend mitsamt dem integrierten Blasling als Inlay unter Einsatz von Hitze und Druck, in ebenfalls an sich bekannter Weise, ausgehärtet -

Die Verwendung eines Blaslings als Inlay bietet bei der Herstellung eines derartigen dreidimensionalen werkstücks aus kohlenstofffaserverstärktem Kunststoff sowohl bei der Fertigung, als auch bei dem zu verwendenden Aushärteverfahren diverse noch zu erörternde Vorteile.

Es hat sich darüber hinaus als vorteilhaft erwiesen, wenn der als Inlay vorgesehene Blasling zwar druckfest und mechanisch belastbar aber gleichwohl plastisch verformbar ausgebildet ist. Dies hat zunächst den Vorteil, dass der Blasling in der Phase des Aushärtens druckbeaufschlagt werden kann, wobei zur besseren Verpressung des Blaslings mit dem CFK-Gewebe es vorteilhaft ist, wenn der Blasling infolge der Druckbeaufschlagung ausgedehnt, also plastisch verformbar ist. Trotz dieser bestimmungsgemäßen Verformbarkeit soll der Blasling aber gleichwohl ausreichend mechanisch fest sein, um mit an sich bekannten Verfahren entweder von Hand oder mit entsprechenden Automaten mit dem CFK-Gewebe maschinell beschickt zu werden.

In konkreter Ausgestaltung kann der Blasling hierzu aus Polyamid gefertigt sein, wobei die Stärke des Polyamids in Abhängigkeit von den gewählten Belastungen, der Größe des zu fertigenden werkstücks und den insofern zu beachtenden Drücken und Temperaturen gewählt ist. Ein übliches Berechnungsverfahren für die Wandstärke des Blaslings, also der Dicke des Polyamid-Werkstoffs bzw. der insoweit einzusetzenden Schichten, ist die Methode der finiten Elemente oder die klassische Laminat-Theorie oder eben andere geeignete Berechaungsverfahren.

Sobald der Blasling, wie vorstehend beschrieben, gefertigt ist, wird er in an sich bekannter weise mit einem CFK-Gewebe beschickt und dann in einem geschlossenen Raum bestimmungsgemäß Hitze und/oder Druck ausgesetzt und somit das CFK-Gewebe mit dem als Inlay dienenden Blasling zur Ausbildung eines homogenen dreidimensionalen Werkstücks verpresst.

Alternativ oder zusätzlich ist es möglich, den Blasling innerhalb des geschlossenen Raumes mittels einer geeigneten Füllung mit einem Überdruck zu beaufschlagen, so dass der Blasling infolge seiner plastischen Verformbarkeit an das den Blasling umgreifende CFK-Gewebe angepresst wird. Diese Möglichkeit führt zu drastisch verbesserten verbundeigenschaften des werkstücks.

Eine solche geeignete Füllung stellt etwa ein Thermoöl dar, welches in erhitztem Zustand durch den Blasling gepresst wird. Auf diese Weise tritt zu dem Effekt der Druckbeaufschlagung der zusätzliche Effekt der Hitzebeaufschlagung hinzu, durch welche ein verbessertes Ergebnis im Hinblick auf die zum Aushärten erforderliche zeit erreicht wird.

Als Füllung zur Druckbeaufschlagung des Blaslings kann mit erhitztes Thermoöl verwendet werden.

Hierzu hat es sich als vorteilhaft erwiesen, wenn an den Blasling ein zu einem späteren Zeitpunkt wenigstens ein entfernbarer Druckstutzen angeformt ist, an den bedarfsweise ein Kompressor angeschlossen werden kann.

Insbesondere im Zusammenhang mit dem Durchpressen von Thermoöl erscheint es insbesondere sinnvoll, eine Saugseite und eine Druckseite vorzusehen, wobei das Thermoöl durch den Blasling hindurchgepresst werden kann. Auf diese Weise kann stets neues, wiederum heißes Thermoöl nachströmen und bereits abgekühltes Öl verdrängen.

Als geschlossener Raum zur Verbringung des Werkstücks zur Druck-/Wärmebeautschlagung kommen wahlweise ein Autoklav oder ein Mikrowellenofen in Betracht. Im Autoklaven kann im Unterschied zum Mikrowellenofen, wie bereits erwähnt wurde, zusätzlich mit Überdruck auf das zu fertigende Werkstück eingewirkt werden.

Ergänzend kann der von dem CFK-Gewebe umschlossene Blasling innerhalb des geschlossenen Raumes in einem Vakuumsack aufgenommen werden, aus dem dann zur Erzeugung eines Unterdrucks die Luft evakuiert wird, um hierdurch das CFK-Gewebe an den Blasling außenwandig anzupressen, etwaige Luft zwischen Blasling und CFK-Gewebe zu entfernen und überdies für eine gute Durchdringung der Schichten des CFK-Gewebes mit dem EpoxidHarz zu sorgen.

Für den Fall, dass als geschlossener Raum ein Autoklav eingesetzt wird, hat es sich bewährt, den Blasling im Autoklaven mit einem Druck mit bis zu 12 bar und Temperaturen von bis zu 450 °C mit dem den Blasling umgebenden CFK-Gewebe zu verbinden und den verbundwerkstoff entsprechend auszuhärten.

In alternativer Ausgestaltung des Verfahrens kann der mit einem CFK-Gewebe beschickte Blasling allerdings auch in einen von zwei Halbzeugen zusammengesetzten Formling eingelegt werden und dann mitsamt dieses Formlings in einen Mikrowellenofen eingebracht werden, wobei dann mittels des Mikrowellenofens die erforderliche Hitzebehandlung vorgenommen wird.

Eine alternative Möglichkeit zur Hitzebehandlung besteht in dem Einlegen des Formlings in ein Werkzeug bestehend aus zwei Halbschalen, wobei die beiden Halbschalen beheizbar sind. Die Erhitzung der Halbschalen kann sowohl elektrisch als auch durch in die Halbschalen eingelassene Heizkanäle erfolgen, welche mit heißem Wasser oder Thermoöl oder ähnlichen Medien gefüllt werden.

Die ggf. erforderliche, ergänzende Druckbehandlung innerhalb des Mikrowellenofens kann dadurch erfolgen, dass zunächst der Blasling, wie vorstehend erwähnt, mit einem Überdruck beaufschlagt wird und überdies der in den Mikrowellenofen eingebrachte Formling in einem vakuumsack angeordnet ist, wobei an diesen vakuumsack eine außerhalb des Mikrowellenofens angeordnete vakuumpumpe angeschlossen wird, und somit ein Unterdruck aufgebracht wird. Auch bei dieser Methode wird in der vorstehend beschriebenen weise der als Inlay dienende Blasling mit dem CFK-Gewebe verpresst.

Die vorstehend bereits erwähnte mechanische Festigkeit des Blaslings erlaubt es, dass der Blasling vor der erwähnten Hitze- und/oder Druckbehandlung mit Carbon-Rovings derart beschickt wird, dass dieser mit den genannten Carbon-EndlosFasern umwoben oder umflochten wird. Hierzu können sowohl manuelle Verfahren wie maschinelle Verfahren zum Einsatz kommen.

Ein solches maschinelles Verfahren wäre die Verwendung einer Klöppelmaschine, in die das Werkstück eingebracht wird. Die Klöppelmaschine wird dann die Carbonfaser formschlüssig an das Werkstück oder den Blasling anpassen und so eine exakte Ummantelung herstellen.

Alternativ können auch vorkonfektionierte CFK-Gewebe eingesetzt werden, wobei in diesem Fall ein elastisches strumpfartiges Gewebe über Blasling oder Werkstück gezogen wird. Gegebenenfalls besonders gefährdete Bereiche der so abgedeckten Oberfläche können auch im Nachhinein noch mit zusätzlichen CFK-Gewebelagen belegt werden.

Durch das beschriebene verfahren, Thermoöl durch den Blasling zu pressen und das werkzeug beheizbar zu gestalten, kann ein Verbringen des werkstücks in einen Autoklaven, gegebenenfalls auch in einen Mikrowellenofen, entfallen. Die durch das Einpressen bzw. die Erhitzung erfolgte Druck/Wärmebeaufschlagung reicht für eine feste verbindung der Carbonfasern aus. Allerdings wird es dadurch erforderlich, die Werkstücke nachzutempern, also in einem Wärmeschrank oder Mikrowellenofen auszuhärten. Dies bietet den Vorteil, dass das Werkstück das Werkzeug deutlich früher verlassen kann, um in den Wärmeschrank mit großer Kapazität verbracht zu werden. Auf diese weise ist eine deutliche Verbesserung der Stückzahlen möglich, da bezüglich eines jeden Werkzeugs ein größerer Durchsatz erzielt werden kann.

Insbesondere eignen sich zur Herstellung der genannten Lüfterflügel zur Verbesserung der thermischen Eigenschaften und der ebensolchen Haltbarkeit Epoxidharze.

Mittels des vorstehend beschriebenen Verfahrens können beispielsweise auch Lüfterflügel, wie sie zur Tunnelbe- und - Entlüftung eingesetzt werden, aber auch Turbinenschaufeln hergestellt werden.

Das Verfahren wird nachstehend anhand eines in der Beschreibung nur schematisch dargestellten Beispiels näher erläutert:

Es zeigen
- Fig. 1:: eine Hohlschaufel eines Lüfters oder einer Turbine im Querschnitt,
- Fig. 2:: einen Mikrowellenofen mit integriertem Formling zur Aushärtung der Hohlschaufel in einer Prinzipskizze,
- Fig. 3:: ein Unterteil und ein Oberteil des Formlings jeweils in einer Draufsicht,
- Fig. 4:: eine Detailansicht zur Verbindung zwischen einem Inlay und der das Inlay umgebenden Beschickung mit einem CFK-Gewebe in einer Prinzipskizze,
- Fig. 5:: einen Blasling mit einer Beschickung aus Carbon-Rovings in einer Draufsicht und
- Fig. 6:: eine weitere Prinzipskizze zur Aushärtung des Werkstücks in einem Mikrowellenofen unter Verwendung eines vakuumsacks.

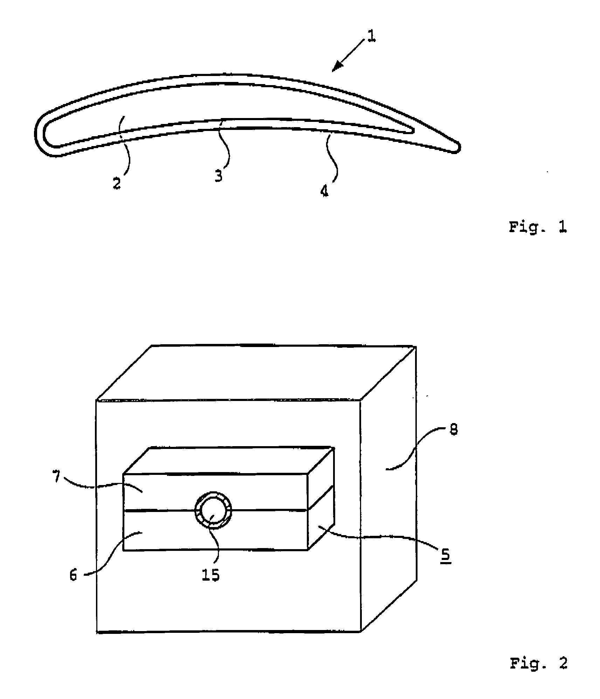

Fig. 1 zeigt beispielhaft ein dreidimensionales Werkstück 1 mit einem Hohlkörper 2 im Querschnitt. Vorliegend handelt es sich um eine aus einem kohlenstofffaserverstärkten Kunststoff (CFK) gefertigte Hohlschaufel mit einem Inlay 3. Das Inlay 3 ist duktil ausgebildet und in seinen Abmessungen etwas kleiner ausgestaltet als der Flügel selbst. Die Außenhaut 4 des Flügels ist aus dem kohlenstofffaserverstärkten Kunststoff nach dem im Folgenden zu erläuternden verfahren hergestellt.

Gemäß der Darstellung in Fig. 2 können derartige werkstücke mittels zweier Halbschalen hergestellt werden, die einen Formling 5 ausbilden. Der Formling 5 besteht aus einem Unterteil 6 und einem Oberteil 7 und kann aus demselben Material bestehen wie das werkstück selbst. Bei der Gestaltung des Werkzeugs bringt dies den Vorteil, dass Werkzeug und Werkstück identische wärmeausdehnungskoeffizienten aufweisen. In den genannten Formling 5 eingelegt ist als geschlossener Hohlkörper ein Blasling zur Ausbildung des späteren Inlays 3. Der Blasling wird mit einem CFK-Gewebe beschickt und der solcherart vorbereitete Blasling in den Formling 5 eingelegt und in einen Mikrowellenofen 8 oder ein beheizbares werkzeug zur Hitzebehandlung eingebracht. Im letzteren Fall wird das Werkstück in einem Wärmeschrank nachgetempert.

Ein derartiger Blasling kann in an sich bekannter Weise aus Polyamid gefertigt werden. Die Bemessung der Wandstärke des Blaslings 9 erfolgt in Abhängigkeit von dem zu fertigenden Werkstück 1, dessen Beanspruchung und des zur Fertigung vorgesehenen Herstellungsverfahrens. Der Blasling 9 kann in herkömmlicher Weise durch Belegung mit CFK-Rovings beaufschlagt, aber auch mittels einer Klöppelmaschine formschlüssig eingeschlossen oder von einer vorkonfektionierten Ummantelung umgeben sein.

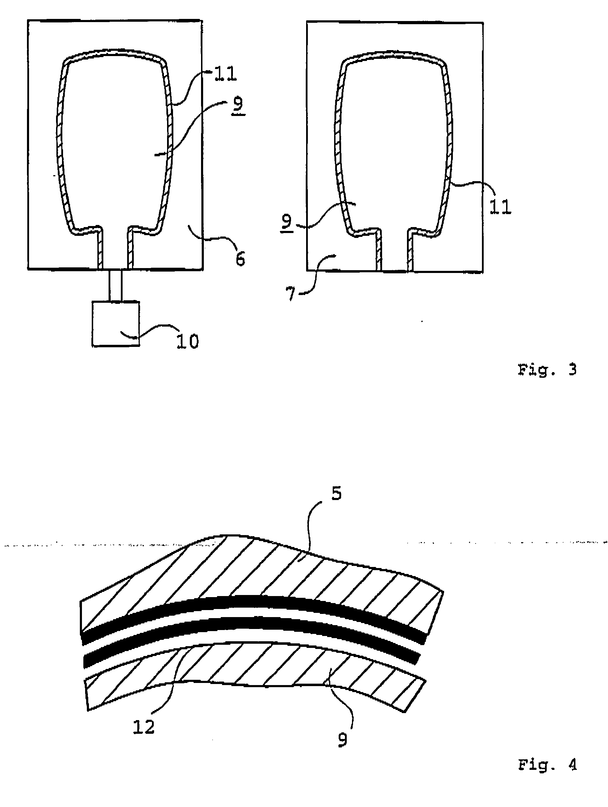

Vorteilhaft ist der Blasling 9 gemäß der Darstellung in Fig. 3 mit wenigstens einem Druckstutzen versehen, um über ein externes Druckaggregat 10 den Blasling 9 mit einem entsprechenden Überdruck beaufschlagen zu können. Dabei kann mittels des Druckaggregats 11 ein geeignetes Gas, im einfachsten Fall Luft, ggf. auch Öl oder andere Medien, in den Blasling 9 eingepresst werden. Durch den Einsatz von heißem Thermoöl kann eine wärmebeaufschlagung erreicht werden, welche die Aushärtung begünstigt. Üblicherweise wird der Blasling 9 mit Drücken von bis zu 12 bar beaufschlagt. Gleichzeitig ist der Blasling 9 im vorliegenden Beispiel mit so genannten "Prepregs", also mit harzimprägnierten Carbonfaser-Bändern, umwickelt.

Ein solcherart mit einem kohlenstofffaserverstärkten Kunststoff-Gewebe beschickter Blasling 9 wird dann in den zweiteiligen Formling 5 bestehend aus einer unteren und einer oberen Halbschale 6 und 7 eingelegt, wie in Fig. 3 gezeigt.

In dem Mikrowellenofen 8, der gegebenenfalls anstelle eines Hochdruckofens, eines so genannten "Autoklaven", im vorliegenden Ausführungsbeispiel zum Einsatz kommt, wird der entsprechend mit einem CFK-Gewebe beschickte Blasling 9 innerhalb des Formlings mit einer Temperatur von bis zu 250 °C beaufschlagt. Darüber hinaus wird der Blasling 9 mit einem Überdruck von bis zu 12 bar beaufschlagt, wobei sich in Folge der Druckbeaufschlagung das Polyamid ausdehnt und so mit dem CFK-Gewebe verpresst wird. Zusätzlich vereinigt gegebenenfalls die Wärme des Mikrowellenofens 8 die Fasern und das Harz des Carbonverbundes.

Gemäß der Darstellung in Fig. 4 wirkt somit inwendig ein Innendruck 12 auf den Blasling 9, der sich infolge dessen ausdehnt, während sich gleichzeitig unter dem Wärmeeinfluss die Kohlenstofffasern erwärmen und sich somit an dem Gewebe anlagern.

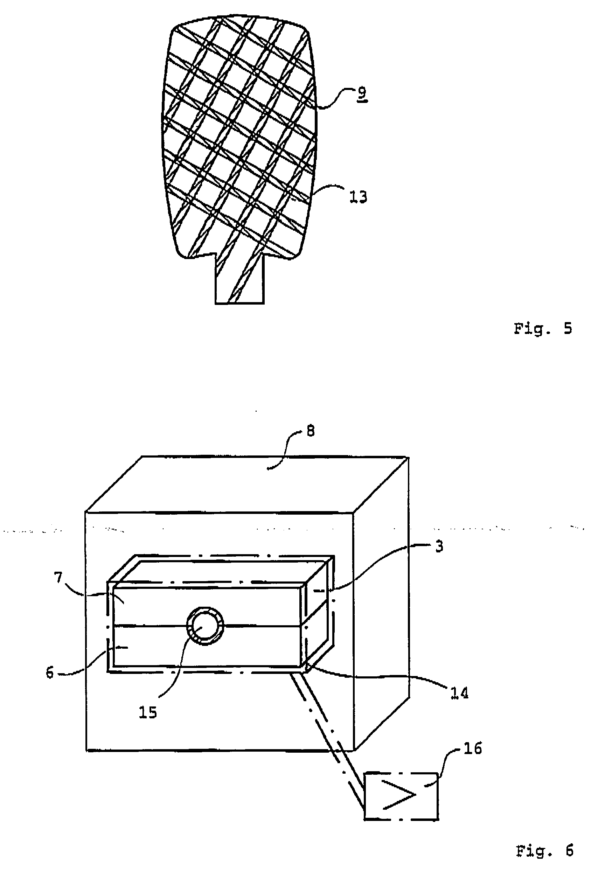

Alternativ zu den vorstehend genannten Prepregs 11 können gemäß Fig. 5 auch Carbon-Rovings maschinell oder manuell um den Blasling 9 gewickelt werden und somit einen mit einem kohlenstofffaserverstärkten Kunststoff beschickten Blasling 9 ausbilden, der dann ebenfalls unter Druck und Wärme zu dem gewünschten werkstück verpresst und ausgehärtet wird.

In weiterer Ausgestaltung des Verfahrens kann der im Mikrowellenofen 8 eingebrachte Formling 5 zusätzlich von einem Vakuumsack 14 umschlossen werden. Aus diesem Vakuumsack 14 wird dann mittels einer entsprechenden vakuumpumpe 16 die Luft evakuiert, mithin ein Unterdruck erzeugt, der neben dem Anpressdruck des druckbeaufschlagten Blaslings 9 dafür sorgt, dass in Folge des Unterdrucks das den Blasling 9 umgebende CFK-Gewebe auf den Blasling 9 gepresst wird und insbesondere etwa im Gewebe eingeschlossene Luftblasen evakuiert werden. Infolge des Unterdrucks wird darüber hinaus das zur Verbindung eingesetzte Epoxidharz mit dem Gewebe verpresst. Das überschüssige Harz kann auslaufen, so dass ein optimales Faser-Matrix-Verhältnis entsteht, was eine besonders hochwertige Oberfläche mit sich bringt. Wie ebenfalls in Fig. 6 ersichtlich, kann diese unbeschadet des in den Formling 5 aufgenommenen Blaslings gleichzeitig inwendig mit einem Überdruck beaufschlagt werden. Aus diesem Grund weist der Formling 5 einen entsprechenden Anschlussstutzen 15 für einen Druckschlauch auf.

Vorstehend ist somit ein Verfahren beschrieben, das es aufgrund der Verwendung eines vorzugsweise aus Polyamid gefertigten Blaslings 9 erlaubt, unter Verzicht eines Autoklaven und gegebenenfalls auch eines Mikrowellenofens ein dreidimensionales Werkstück aus kohlenstofffaserverstärktem Kunststoff mit einem entsprechenden Inlay 3 herzustellen, das höchsten Anforderungen bezüglich der Oberfläche des Werkstücks, wie auch bezüglich der Festigkeit des Werkstücks, genügt und deshalb beispielsweise als Turbinenschaufel oder Lüfterschaufel gemäß Fig. 1 eingesetzt werden kann. Aufgrund des möglichen Verzichts auf den Autoklaven ist die Herstellung in drastisch verkürzten Taktzeiten mit erheblich reduzierten Energiekosten möglich.

### BEZUGSZEICHENLISTE

- 1: Werkstück
- 2: Hohlraum
- 3: Inlay
- 4: Außenhaut
- 5: Formling
- 6: Unterteil
- 7: Oberteil
- 8: Mikrowellenofen
- 9: Blasling
- 10: Druckaggregat
- 11: Prepregs
- 12: Innendruck
- 13: Carbon-Roving
- 14: vakuumsack
- 15: Anschlussstutzen
- 16: Vakuumpumpe

## Patentansprüche

1. Lüfterrad für einen Axialventilator, insbesondere einen Tunnelstrahlventilator zur Tunnelbe- und -entlüftung, mit mehreren Lüfterschaufeln, jeweils umfassend einen Lüfterflügel und einen Einspannzapfen, die mit einer zentralen Nabe des Lüfterrads durch kraftschlüssige verspannung der Einspannzapfen verbunden sind, wobei zumindest die Lüfterflügel aus einem kohlefaserverstärkten Kunststoffgewebe, kurz aus einem CFK-Gewebe, gefertigt sind,
**dadurch gekennzeichnet, dass** die Lüfterflügel einstückig und klebefrei hergestellt sind,

2. Lüfterrad nach Anspruch 1, **dadurch gekennzeichnet, dass** die Gewebelagen zum Aufbau des Lüfterflügels, insbesondere die Kohlefasern des CFK-Gewebes, bei bestimmungsgemäßer Montage der Lüfterschaufeln radial nach außen weisend angeordnet sind.

3. Lüfterrad nach Anspruch 2, **dadurch gekennzeichnet, dass** die Lüfterschaufeln und/oder die jeweiligen Einspannzapfen der Lüfterschaufel aus einem weitgehend durchgehenden CFK-Gewebe gefertigt sind, wobei in dem der Nabe zugewandten Anschlussbereich des Lüfterflügels jeweils eine Aussparung zur Aufnahme des Einsteckzapfens nachträglich eingearbeitet ist.

4. Lüfterrad nach einem der vorhergehenden Ansprüche, **dadurch gekennzeichnet, dass** die bestimmungsgemäß gefertigten Lüfterflügel zumindest weitgehend hohl ausgebildet sind.

5. Lüfterrad nach einem der vorhergehenden Ansprüche, **dadurch gekennzeichnet, dass** in das CFK-Gewebe zur Aufnahme der Lüfterflügel zusätzlich keramische werkstoffe, vorzugsweise karbidfaserverstärktes Siliziumkarbid und/oder reines Siliziumkarbid, mittels eines Infiltrationsverfahrens eingearbeitet sind.

6. Verfahren zur Herstellung eines Lüfterrades für einen Axialventilator, insbesondere zur Tunnelbe- und
- entlüftung mit mehreren Lüfterschaufeln, jeweils umfassend einen Lüfterflügel und einen Einspannzapfen, die mit einer zentralen Nabe durch kraftschlüssiges Verspannen des Einspannzapfens verbunden werden, wobei zumindest die Lüfterflügel aus einem kohlefaserverstarkten Kunststoff, kurz einem CFK-Gewebe, gefertigt werden,
**gekennzeichnet durch** folgende Schritte:
- es wird ein Kern, vorzugsweise aus Wachs, gefertigt, dessen Form zumindest im Wesentlichen dem Profil des Lüfterflügels entspricht,
- dieser Kern wird dann mit mehreren Gewebelagen aus CFK-Gewebe derart belegt, dass die Verzugsrichtung der Gewebefasern des CFK-Gewebes zumindest weitgehend in Richtung der Längserstreckung des Kerns radial nach außen laufen,
- der entsprechend mit CFK-Gewebefasern belegte Kern anschließend in eine mehrteilige Form eingelegt wird, die anschließend verschlossen wird und
- im Weiteren mit einem geeigneten Harz, vorzugsweise Epoxidharz zum Aufbau der Flügelwandung, verfüllt und ausgehärtet wird,
- wobei während des Aushärtens das Material, vorzugsweise Wachs, zum Aufbau des Kerns unter Einwirkung von Temperatur und Zentrifugalkraft aus einer Entleerungsöffnung der Form ausgetrieben wird
- und erst dann die Form geöffnet wird.

7. Verfahren nach Anspruch 6, **dadurch gekennzeichnet, dass** der Wachskern in potentiell gefährdeten Abschnitten des Lüfterflügels mit speziell zugeschnittenen Gewebelagen zusätzlich belegt wird.

8. Verfahren nach Anspruch 6 oder 7, **dadurch gekennzeichnet, dass** durch ein Infiltrationsverfahren keramische Werkstoffe in den Lüfterflügelwerkstoff, vorzugsweise mit dem Harz in die Form, eingebracht werden.

9. Verfahren zur Herstellung eines Lüfterflügels gemäß Anspruch 1, bei dem entsprechend dünne Lüfterflügel mittels einer beheizten Presse einstückig und klebefrei ohne Verwendung eines Kerns hergestellt werden.

10. Verfahren zur Herstellung eines Lüfterrades aus Faserverbundwerkstoffen, insbesondere aus kohlefaserverstärktem Kunststoff (CFK), bei dem folgende Schritte durchlaufen werden:
- Fertigung eines Hohlkammer-Blasteils aus einem geeigneten Thermoplast, das im wesentlichen die Form des zu fertigenden Werkstückes besitzt;
- Beschickung des Hohlkammer-Blasteils mit einem CFK-Gewebe, insbesondere mit Prepregs (11) oder Carbonfaser-Gelegen;
- Ausbildung eines verbundfaserwerkstoffs zwischen dem CFK-Gewebe und dem Hohlkammer-Blasteil als Inlay (3) unter Einsatz von Hitze und Druck.

11. verfahren nach Anspruch 10, **dadurch gekennzeichnet, dass** der Blasling (9) druckfest, mechanisch fest, aber gleichwohl plastisch verformbar ausgebildet ist.

12. Verfahren nach einem der Ansprüche 10 oder 11, **dadurch gekennzeichnet, dass** der mit einem CFK-Gewebe beschickte Blasling (9) in einem geschlossenen Raum, vorzugsweise in einem Autoklav oder einem Mikrowellenofen (8), Hitze und/oder Druck ausgesetzt wird.

13. Verfahren nach Anspruch 12, **dadurch gekennzeichnet, dass** der Blasling (9) in dem geschlossenen Raum mittels einer geeigneten Füllung derart druckbeaufschlagt wird, dass der Blasling (9) von innen an das den Blasling (9) umgreifende CFK-Gewebe angepresst wird.

14. verfahren nach einem der Ansprüche 10 bis 13, **dadurch gekennzeichnet, dass** an den Blasling (9) zumindest ein Druckstutzen zum Anschluss eines Kompressors angeformt ist.

15. Verfahren nach einem der Ansprüche 13 oder 14, **dadurch gekennzeichnet, dass** der Blasling eine Druckseite und eine Saugseite aufweist, wobei die Füllung, vorzugsweise ein geeignetes Thermoöl, von der Druckseite her zur Saugseite hin durch den Blasling (9) hindurchgepresst wird.

16. Verfahren nach einem der Ansprüche 10 bis 15, **dadurch gekennzeichnet, dass** der mit dem CFK-Gewebe beschickte Blasling (9) in dem geschlossenen Raum, vorzugsweise unter Verwendung eines den Blasling (9) umschließenden Vakuumsacks (14), außenwandig mit einem Unterdruck beaufschlagt wird, um hierdurch das CFK-Gewebe außenwandig an den Blasling (9) anzupressen.

17. Verfahren nach einem der Ansprüche 10 bis 16, **dadurch gekennzeichnet, dass** der geschlossene Raum als gasdicht verschlossener Druckbehälter, mithin als Autoklav, ausgebildet ist und der mit einem CFK-Gewebe beschickte Blasling (9) im Autoklav einem Überdruck, von vorzugsweise bis zu 11 bar und Temperaturen von vorzugsweise bis zu 450 °C ausgesetzt ist.

18. Verfahren nach einem der Ansprüche 10 bis 17, **dadurch gekennzeichnet, dass** der mit einem CFK-Gewebe beschickte Blasling (9) in einen von zwei Halbzeugen zusammengesetzten Formling (5) eingelegt wird und innerhalb dieses Formlings (5) in einen Mikrowellenofen (8) eingebracht und ebendort einer Hitzebehandlung unterzogen wird.

19. Verfahren nach einem der Ansprüche 10 bis 18, **dadurch gekennzeichnet, dass** der mit einem CFK-Gewebe beschickte Formling (9) in ein von zwei beheizbaren Halbschalen zusammengesetztes Werkzeug eingelegt wird.

20. Verfahren nach Anspruch 19, **dadurch gekennzeichnet, dass** den Halbschalen Kanäle eingeprägt sind, durch welche eine zur Wärmeübertragung geeignete, erhitzte Füllung, vorzugsweise Thermoöl, hindurchgeleitet wird.

21. Verfahren nach einem der Ansprüche 10 bis 20, **dadurch gekennzeichnet, dass** der Blasling (9) vor der Hitze- und/oder Druckbehandlung mit Carbon-Rovings (13) beschickt, vorzugsweise umwoben oder umflochten und/oder unter Verwendung einer Klöppelmaschine zumindest weitgehend formschlüssig mit CFK-Gewebe beaufschlagt wird.

22. Verfahren nach einem der Ansprüche 10 bis 21, **dadurch gekennzeichnet, dass** der Blasling (9) mit einem vorkonfektionierten CFK-Gewebe überzogen wird.

23. Verfahren nach einem der Ansprüche 10 bis 22, **dadurch gekennzeichnet, dass** nach der Entfernung des Formlings aus dem werkzeug dieser in einem Wärmeschrank oder einem Mikrowellenofen nachgetempert wird.

24. Verwendung des Verfahrens nach einem der Ansprüche 10 bis 23, **dadurch gekennzeichnet, dass** mittels dieses Verfahrens Lüfterflügel, vorzugsweise zur Tunnelbe- und -entlüftung, oder Turbinen-Schaufeln hergestellt werden.
